# EUROPEAN PATENT SPECIFICATION

(11) **EP 4 017 925 B1**
(45) Date of publication and mention of the grant of the patent: **24.01.2024**
(21) Application number: 19942034.0
(22) Date of filing: 22.08.2019
(51) Int. Cl.: C09D 5/20, C09D 183/05, C09D 183/07, C09D 5/00

(54) **POLYORGANOSILOXANE RELEASE COATING COMPOSITION**
POLYORGANOSILOXANTRENNBESCHICHTUNGSZUSAMMENSETZUNG
COMPOSITION DE REVÊTEMENT ANTI-ADHÉRENTE DE POLYORGANOSILOXANE

(43) Date of publication of application: 29.06.2022
(73) Proprietor: Dow Silicones Corporation, Midland, MI 48686-0994 (US)
(72) Inventor: HUANG, Fuming, Shanghai 201203 (CN); LIU, Zhihua, Shanghai 201203 (CN); ZHANG, Shenglan, Shanghai 201203 (CN)
(74) Representative: Murgitroyd & Company
(86) International application number: PCT/CN2019/101940
(87) International publication number: WO 2021/031185

(56) References cited:
- WO-A1-2015/058398
- WO-A1-2018/112911
- WO-A1-2018/148504
- WO-A1-2019/079365
- WO-A1-2020/231644
- CN-A- 102 300 932
- GB-A- 2 073 765
- TW-A- 201 925 388
- US-A- 5 789 084

## Description

### CROSS REFERENCE TO RELATED APPLICATIONS

None.

### TECHNICAL FIELD

A polyorganosiloxane release coating composition and method for its preparation are disclosed. The polyorganosiloxane release coating composition can be cured on a substrate to form a release liner useful for protecting a pressure sensitive adhesive.

### BACKGROUND

The use and market size of tight release liner applications is expanding in Asian markets. One proposed method to increase release force of a polyorganosiloxane release coating is to add a high release additive (generally a siloxane resin) to a diluted or solvent based release coating composition. However, including such an additive may be inefficient.

The following documents may be useful in understanding the present invention. WO2020231644 discloses a polysiloxane prepared by a hydrosilylation reaction of a polyorganosilicate resin and an SiH terminated polydiorganosiloxane. The polysiloxane acts as a controlled release additive when formulated into a release coating composition. The release coating composition can be coated on a surface of a substrate and cured to form a release liner. WO2019079365 discloses a hydrosilylation curable composition which includes a 2-substituted-1-alkynyl-1-cyclohexanol as an inhibitor. The hydrosilylation curable composition is used for preparing release coatings for packaging applications. WO2015058398 discloses a solventless release coating organopolysiloxane composition and sheet-form substrate having a cured release coating. The solventless release coating organopolysiloxane composition has a viscosity of 50 to 3,000 m Pa ·s, and comprises (A) 100 parts of an organopolysiloxane fluid having a viscosity at 2°C of 10 to 1,000 mPa·s and alkenyl content of 0.10 to 3.0 wt%; (B) 0.5 to 15 parts of a diorganopolysiloxane having a viscosity at 25°C of 10,000 to 150,000 m Pa · s, and 0.05 to 0.30% of alkenyl groups at the pendant position of its siloxane-chain and trialkylsiloxy-terminals; (C) a prescribed quantity of an organohydrogenpolysiloxane; and (D) a hydrosilylation reaction catalyst. Also described is a cured release coating-bearing sheet-form substrate, that has a cured coating from the solventless release coating organopolysiloxane composition. WO2018112911 discloses a release coating composition including a combination of branched polyorganosiloxanes. The first branched siloxane in the combination is an MDQ siloxane of unit formula: (R¹₃SiO_{1/2})ₐ(R²R¹₂SiO_{1/2})_{b}(R¹₂SiO_{2/2})_{c}(SiO_{4/2})_{d}, a≥0, b > 0, c≤995, and d > 0. The second branched siloxane in the combination is an MDT silsesquioxane of unit formula: (R¹₃SiO_{1/2})ₑ(R²R¹₂SiO_{1/2})_{f}(R¹₂SiO_{2/2})_{g}(R¹SiO_{3/2})ₕ, e≥0, f> 0, g≤995, and h > 0. Each R¹ is independently a monovalent hydrocarbon group free of aliphatic unsaturation and each R² is an aliphatically unsaturated hydrocarbon group. The release coating composition further includes a crosslinker having at least 3 silicon-bonded hydrogen atoms per molecule, a platinum group metal catalyst and an inhibitor. WO2018148504 discloses a curable composition which comprises: (A) an organopolysiloxane containing at least two silicon-bonded aliphatically unsaturated groups per molecule; (B) an organohydrogensiloxane containing at least two silicon-bonded hydrogen atoms per molecule; (C) a hydrosilylation-reaction catalyst; (D) a hydrosilylation-reaction inhibitor; and (E) a catalyst different from component (C) and capable of deactivating the (D) hydrosilylation-reaction inhibitor at an elevated temperature of from 50 to 120° C such that components (A) and (B) react in the presence of at least component (C) at the elevated temperature. A process of preparing a coated substrate with the curable composition is also disclosed. US5789084 discloses a curable liquid silicone rubber coating composition that can be used for thin coatings on synthetic fabrics, without using a dilution solvent. The curable composition includes: (A) a diorganopolysiloxane that contains at least 2 alkenyl groups in each molecule; (B) an organopolysiloxane resin; (C) an inorganic filler; (D) an organohydrogenpolysiloxane that contains at least 2 silicon-bonded hydrogen atoms in each molecule; (E) a platinum group catalyst; (F) an epoxy-functional organosilicon compound; and (G) an organotitanium compound.

### PROBLEM TO BE SOLVED

A polyorganosiloxane release coating composition, which can be applied onto the surface of a substrate such as a polymer film or paper to provide tight release force with low migration (as indicated by high sustained adhesion strength) is desired by customers, particularly in the electronics industry to avoid contamination of electronic components with polyorganosiloxane while still providing the desired release force.

### SUMMARY

A polyorganosiloxane release coating composition comprises:
(A) a polydiorganosiloxane of unit formula:
   (R¹₂R²SiO_{1/2})ₐ(R¹₂SiO_{2/2})_{b}(R¹R³SiO_{2/2})_{c}(R³₂SiO_{2/2})_{d}, where each R¹ is an independently selected alkyl group of 1 to 18 carbon atoms, each R² is an independently selected alkenyl group of 2 to 18 carbon atoms, each R³ is an independently selected aryl group of 5 to 20 carbon atoms, subscript a has an average value of 2, subscript b > 0, subscript c ≥ 0, subscript d ≥ 0 with the proviso that a quantity (c + d) > 0, and a quantity (a + b + c + d) is sufficient to give the polydiorganosiloxane a number average molecular weight ≥ 3,000 g/mol;
(B) a polyorganosilicate resin having silicon bonded alkenyl groups,
(C) a polyalkylhydrogensiloxane, having at least two silicon-bonded hydrogen atoms per a molecule, where the polyalkylhydrogensiloxane is present in an amount sufficient to provide 0.8 mole to 5 moles of silicon-bonded hydrogen atoms per mole of alkenyl groups in starting materials (A) and (B);
(D) a hydrosilylation reaction catalyst in a catalytic amount;
(E) a hydrosilylation reaction inhibitor, in an amount of 0.001 part by weight to 2 parts by weight, per 100 parts by weight of starting materials (A) and (B);
(F) an anchorage additive, selected from the group consisting of (F-1) vinyltriacetoxysilane, (F-2) glycidoxypropyltrimethoxysilane, (F-3) a combination of (F-1) and (F-2), (F-4) a combination of (F-3) and a polydimethylsiloxane terminated with hydroxyl groups, methoxy groups, or terminated with both a hydroxy group and a methoxy group, and (F-5) 2-(3,4-epoxycyclohexyl)ethyltrimethoxysilane, in an amount of 0.01 part by weight to 10 parts by weight per 100 parts by weight of starting materials (A) and (B); and
   optionally (G) a solvent;
   where the composition is free of polydiorganosiloxanes that do not have silicon bonded aryl groups, other than starting material (A).

A method for preparing a release liner comprises:
1) coating the polyorganosiloxane release coating composition described above on a surface of a substrate, and
2) curing the composition to form a release coating on the surface of the substrate.

Further embodiments of the invention are set forth in the dependent claims.

### BRIEF DESCRIPTION OF THE DRAWINGS

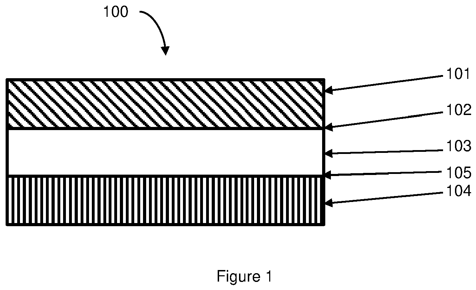

Figure 1 shows a partial cross section of a release liner 100. The release liner comprises a polyorganosiloxane release coating 101 prepared by curing the polyorganosiloxane release coating composition described herein on a first surface 102 of a film substrate 103. The release liner 100 further includes a carrier 104 mounted to an opposing surface 105 of the film substrate 103.

### DETAILED DESCRIPTION

A polyorganosiloxane release coating composition comprises:
(A) a polydiorganosiloxane of unit formula:
   (R¹₂R²SiO_{1/2})ₐ(R¹₂SiQ_{2/2})_{b}(R¹R³SiO_{2/2})_{c}(R³₂SiO_{2/2})_{d}, where each R¹ is an independently selected alkyl group of 1 to 18 carbon atoms, each R² is an independently selected alkenyl group of 2 to 18 carbon atoms, each R³ is an independently selected aryl group of 5 to 20 carbon atoms, subscript a has an average value of 2, subscript b > 0, subscript c ≥ 0, subscript d ≥ 0 with the proviso that a quantity (c + d) > 0, and a quantity (a + b + c + d) is sufficient to give the polydiorganosiloxane a number average molecular weight ≥ 3,000 g/mol;
(B) a polyorganosilicate resin having silicon bonded alkenyl groups,
(C) a polyalkylhydrogensiloxane, having at least two silicon-bonded hydrogen atoms per a molecule, where the polyalkylhydrogensiloxane is present in an amount sufficient to provide 0.8 mole to 5 moles of silicon-bonded hydrogen atoms per mole of alkenyl groups in starting materials (A) and (B);
(D) a hydrosilylation reaction catalyst in a catalytic amount;
(E) a hydrosilylation reaction inhibitor, in an amount of 0.001 part by weight to 2 parts by weight, per 100 parts by weight of starting materials (A) and (B);
(F) an anchorage additive, selected from the group consisting of (F-1) vinyltriacetoxysilane, (F-2) glycidoxypropyltrimethoxysilane, (F-3) a combination of (F-1) and (F-2), (F-4) a combination of (F-3) and a polydimethylsiloxane terminated with hydroxyl groups, methoxy groups, or terminated with both a hydroxy group and a methoxy group, and (F-5) 2-(3,4-epoxycyclohexyl)ethyltrimethoxysilane, in an amount of 0.01 part by weight to 10 parts by weight per 100 parts by weight of starting materials (A) and (B); and
   optionally (G) a solvent;
   where the composition is free of polydiorganosiloxanes that do not have silicon bonded aryl groups, other than starting material (A).

### (A) Polydiorganosiloxane

The polyorganosiloxane release coating composition herein comprises starting material (A), a polydiorganosiloxane having both a silicon bonded alkenyl group and a silicon bonded aryl group. This polydiorganosiloxane may be a bis-alkenyl-terminated polydiorganosiloxane with pendant aryl groups. Starting material (A) of the polydiorganosiloxane has unit formula:
(R¹₂R²SiO_{1/2})ₐ(R¹₂SiO_{2/2})_{b}(R¹R²SiO_{2/2})_{c}(R³₂SiO_{2/2})_{d}, where each R¹ is an independently selected alkyl group of 1 to 18 carbon atoms, each R² is an independently selected alkenyl group of 2 to 18 carbon atoms, each R³ is an independently selected aryl group of 5 to 20 carbon atoms, subscript a has an average value of 2, subscript b > 0, subscript c ≥ 0, subscript d ≥ 0 with the proviso that a quantity (c + d) > 0, and a quantity (a + b + c + d) is sufficient to give the polydiorganosiloxane a number average molecular weight ≥ 3,000 g/mol.

The alkyl group for R¹ has 1 to 18 carbon atoms, alternatively 1 to 12 carbon atoms, alternatively 1 to 6 carbon atoms, and alternatively 1 to 4 carbon atoms. Suitable alkyl groups for R¹ are exemplified by, but not limited to, methyl, ethyl, propyl (*e*.*g*., iso-propyl and/or n-propyl), butyl (*e*.*g*., isobutyl, n-butyl, tert-butyl, and/or sec-butyl), pentyl (*e*.*g*., isopentyl, neopentyl, and/or tert-pentyl), hexyl, as well as branched saturated hydrocarbon groups of 6 carbon atoms. Alternatively, each R¹ is independently selected from the group consisting of methyl, ethyl, and propyl. Each instance of R¹ may be the same or different. Alternatively, each R¹ is a methyl group.

The alkenyl group for R² is capable of undergoing hydrosilylation reaction. Suitable alkenyl groups include as vinyl, allyl, butenyl, and hexenyl. Alternatively, each R² may be vinyl, allyl or hexenyl; and alternatively vinyl or hexenyl. Each instance of R² may be the same or different. Alternatively, each R² is a vinyl group.

The aryl group for R³ has 5 to 20 carbon atoms, alternatively 6 to 10 carbon atoms. Suitable aryl groups are exemplified by, but not limited to, phenyl, tolyl, xylyl, naphthyl, benzyl, and dimethyl phenyl. Each instance of R³ may be the same or different. Alternatively, each R³ may be phenyl.

The subscripts a, b, c, and d in the unit formula above are sufficient to provide the polydiorganosiloxane with a Mn of at least 3,000 g/mol, alternatively 3,000 g/mol to 500,000 g/mol, and alternatively 15,000 g/mol to 400,000 g/mol. The polydiorganosiloxane may have an alkenyl group content of 0.01% to 5% by weight. The polydiorganosiloxane may have an aryl group content of 1% to 50% by weight.

Examples of aryl-functional polydiorganosiloxanes include dimethylvinyl-siloxy-terminated poly(dimethyl/methylphenyl)siloxane copolymers, dimethylvinyl-siloxy-terminated poly(dimethyl/diphenyl)siloxane copolymers, dimethylhexenyl-siloxy-terminated poly(dimethyl/methylphenyl)siloxane copolymers, dimethylhexenyl-siloxy-terminated poly(dimethyl/diphenyl)siloxane copolymers, and combinations of two or more thereof. the Aryl-functional polydiorganosiloxanes may be synthesized by equilibration processes known in the art, such as that described in U.S. Patent 6,956,087 and U.S. Patent 5,169,920.

### (B) Polyorganosilicate Resin

The polyorganosiloxane release coating composition described herein further comprises starting material (B), a polyorganosilicate resin having silicon bonded alkenyl groups. The polyorganosilicate resin comprises monofunctional units ("M" units) of formula R^{M}₃SiO_{1/2} and tetrafunctional units ("Q" units) of formula SiO_{4/2}, where each R^{M} is an independently selected monovalent hydrocarbyl group. Suitable monovalent hydrocarbyl groups for R^{M} may have 1 to 20 carbon atoms, alternatively 1 to 12 carbon atoms, alternatively 1 to 8 carbon atoms, alternatively 1 to 4 carbon atoms, and alternatively 1 to 2 carbon atoms. Alternatively, the hydrocarbyl groups for R^{M} may be selected from the group consisting of alkyl groups, alkenyl groups and aryl groups; alternatively alkyl and aryl; alternatively alkyl and alkenyl; and alternatively alkyl. The alkyl groups are exemplified by methyl, ethyl, propyl (*e*.*g*., iso-propyl and/or n-propyl), butyl (*e*.*g*., isobutyl, n-butyl, tert-butyl, and/or sec-butyl), pentyl (*e*.*g*., isopentyl, neopentyl, and/or tert-pentyl), hexyl, heptyl, octyl, nonyl, and decyl, as well as branched saturated monovalent hydrocarbyl groups of 6 or more carbon atoms including cycloalkyl groups such as cyclopentyl and cyclohexyl. The aryl groups are exemplified by cyclopentadienyl, phenyl, tolyl, xylyl, anthracenyl, benzyl, 1-phenylethyl, 2-phenylethyl, and naphthyl. Monocyclic aryl groups may have 5 to 9 carbon atoms, alternatively 6 to 7 carbon atoms, and alternatively 5 to 6 carbon atoms. Polycyclic aryl groups may have 10 to 17 carbon atoms, alternatively 10 to 14 carbon atoms, and alternatively 12 to 14 carbon atoms. Alternatively, in the polyorganosilicate resin, each R^{M} may be independently selected from the group consisting of alkyl, alkenyl, and aryl. Alternatively, each R^{M} may be selected from methyl, vinyl and phenyl. Alternatively, at least one-third, alternatively at least two thirds of the R^{M} groups are methyl groups. Alternatively, the M units may be exemplified by (Me₃SiO_{1/2}), (Me₂PhSiO_{1/2}), and (Me₂ViSiO_{1/2}). The polyorganosilicate resin is soluble in solvents such as those described herein, exemplified by liquid hydrocarbons, such as benzene, toluene, xylene, and heptane, or in liquid organosilicon compounds such as low viscosity linear and cyclic polydiorganosiloxanes.

When prepared, the polyorganosilicate resin comprises the M and Q units described above, and the polyorganosilicate resin further comprises units with silanol (silicon bonded hydroxyl) groups and may comprise neopentamer of formula Si(OSiR^{M}₃)₄, where R^{M} is as described above. Si²⁹ Nuclear Magnetic Resonance (NMR) spectroscopy, as described in U.S. Patent 9,509,209 at col. 32, Reference Example 2, may be used to measure molar ratio of M and Q units, where said ratio is expressed as {M(resin)+(M(neopentamer)}/{Q(resin)+Q(neopentamer)} and represents the molar ratio of the total number of triorganosiloxy groups (M units) of the resinous and neopentamer portions of the polyorganosilicate resin to the total number of silicate groups (Q units) in the resinous and neopentamer portions (M:Q ratio). M:Q ratio may be 0.5:1 to 1.5:1, alternatively 0.6:1 to 0.9:1.

The Mn of the polyorganosilicate resin depends on various factors including the types of hydrocarbyl groups represented by R^{M} that are present. The Mn of the polyorganosilicate resin refers to the number average molecular weight measured using GPC according to the procedure in U.S. Patent 9,593,209 at col. 31, Reference Example 1. The Mn of the polyorganosilicate resin may be greater than 1,000 g/mol, alternatively 1,000 g/mol to 8,000 g/mol, alternatively 1,000 g/mol to 2,000 g/mol, alternatively 1,100 g/mol to 1,900 g/mol, alternatively 1,200 g/mol to 1,800 g/mol, alternatively 1,300 g/mol to 1,700 g/mol, alternatively 1,400 g/mol to 1,600 g/mol, and alternatively 1,500 g/mol.

U.S. Patent 8,580,073 at col. 3, line 5 to col. 4, line 31 discloses silicone resins, which are examples of polyorganosilicate resins described herein. The polyorganosilicate resin can be prepared by any suitable method, such as cohydrolysis of the corresponding silanes or by silica hydrosol capping methods. The polyorganosilicate resin may be prepared by silica hydrosol capping processes such as those disclosed in U.S. Patent 2,676,182 to Daudt, et al.; U.S. Patent 4,611,042 to Rivers-Farrell et al.; and U.S. Patent 4,774,310 to Butler, et al. The method of Daudt, et al. described above involves reacting a silica hydrosol under acidic conditions with a hydrolyzable triorganosilane such as trimethylchlorosilane, a siloxane such as hexamethyldisiloxane, or mixtures thereof, and recovering a copolymer having M-units and Q-units. The resulting copolymers generally contain from 2 to 5 percent by weight of silicon bonded hydroxyl (silanol) groups.

The intermediates used to prepare the polyorganosilicate resin may be triorganosilanes and silanes with four hydrolyzable substituents or alkali metal silicates. The triorganosilanes may have formula R^{M}₃SiX¹, where R^{M} is as described above and X¹ represents a hydrolyzable substituent such as halogen, alkoxy, acyloxy, hydroxyl, oximo, or ketoximo; alternatively, halogen, alkoxy or hydroxyl. Silanes with four hydrolyzable substituents may have formula SiX²₄, where each X² is halogen, alkoxy or hydroxyl. Suitable alkali metal silicates include sodium silicate.

The polyorganosilicate resin prepared as described above typically contains silicon bonded hydroxyl groups, i.e., of formulae, HOSi_{3/2} and/or HOR^{M}₂SiO_{1/2}. The polyorganosilicate resin may comprise up to 2% of silicon bonded hydroxyl groups. The concentration of silicon bonded hydroxyl groups present in the polyorganosilicate resin may be determined using FTIR spectroscopy according to ASTM Standard E-168-16. For certain applications, it may desirable for the amount of silicon bonded hydroxyl groups to be below 0.7%, alternatively below 0.3%, alternatively less than 1%, and alternatively 0 to 0.8%. Silicon bonded hydroxyl groups formed during preparation of the polyorganosilicate resin can be converted to trihydrocarbyl-siloxy groups or to a different hydrolyzable group by reacting the polyorganosilicate resin with a silane, disiloxane, or disilazane containing the appropriate terminal group. Silanes containing hydrolyzable groups may be added in molar excess of the quantity required to react with the silicon bonded hydroxyl groups on the polyorganosilicate resin.

Alternatively, the polyorganosilicate resin may further comprises 2% or less, alternatively 0.7% or less, and alternatively 0.3% or less, and alternatively 0.3% to 0.8% of units represented by formula XSiO_{3/2} and/or XR^{M}₂SiO_{1/2} where R^{M} is as described above, and X represents a hydrolyzable substituent, as described above for X¹.

The polyorganosilicate resin useful herein has terminal aliphatically unsaturated groups. The polyorganosilicate resin having terminal aliphatically unsaturated groups may be prepared by reacting the product of Daudt, *et al.* described above with an unsaturated organic group-containing endblocking agent and an endblocking agent free of aliphatic unsaturation, in an amount sufficient to provide from 3 to 30 mole percent of unsaturated organic groups in the final product. Examples of endblocking agents include, but are not limited to, silazanes, siloxanes, and silanes. Suitable endblocking agents are known in the art and exemplified in U.S. Patents 4,584,355; 4,591,622; and 4,585,836. A single endblocking agent or a mixture of such agents may be used to prepare such resin.

Alternatively, the polyorganosilicate resin may comprise unit formula: (R¹₃SiO_{1/2})ₑ(R¹₂R²SiO_{1/2})_{f}(SiO_{4/2})_{g}, where R¹ and R² are as described above and subscripts e, f and g have average values such that e ≥ 0, f ≥ 0, g > 1, and (e + f) > 4, with the proviso that a quantity (e + f + g) is sufficient to give the polyorganosilicate resin the Mn described above.

Starting materials (A) and (B) may be present in relative amounts such that a resin/polymer weight ratio i.e., (B)/(A) ratio), is 1:10 to 10:1.

### (C) Polyalkylhydrogensiloxane

The polyorganosiloxane release coating composition described herein further comprises starting material (C), a polyalkylhydrogensiloxane having at least two silicon-bonded hydrogen atoms per molecule, where the polyalkylhydrogensiloxane is present in an amount sufficient to provide 0.8 mole to 5 moles of silicon-bonded hydrogen atoms per mole of alkenyl groups in starting materials (A) and (B). Without wishing to be bound by theory, it is thought that starting material (C) may act as a crosslinker herein.

The polyalkylhydrogensiloxane may comprise unit formula (C1): (R¹₃SiO_{1/2})ₘ(R¹HSiO_{2/2})ₙ(R¹₂SiO_{2/2})ₒ(R¹₂HSiO_{1/2})ₚ, where R¹ is as described above, subscript m is 0 to 2, subscript p is 0 to 2, a quantity (m + p) has an average value of 2, subscript n > 0, subscript o > 0, a quantity (n + p) ≥ 3, and a quantity (m + n + o + p) has a value sufficient to give the polyalkylhydrogensiloxane a viscosity of 5 mPa s to 500 mPa s, alternatively 25 mPa s to 200 mPa s, and alternatively 25 mPa s to 70 mPa s measured at 25°C at 0.1 to 50 RPM on a Brookfield DV-III cone & plate viscometer with #CP-52 spindle.

Alternatively, the polyalkylhydrogensiloxane may comprise unit formula (C2): (HR¹₂SiO_{1/2})ᵣ(SiO_{4/2})_{q}, where R¹ is as described above, and subscripts q and r are present in a molar ratio r/q of 0.5/1 to 2/1, alternatively >1/1 to 2/1, and a quantity (q + r) has a value sufficient to give the polyalkylhydrogensiloxane the viscosity described above.

Polyalkylhydrogensiloxanes for starting material (C) are exemplified by:
C-I) trimethylsiloxy-terminated poly(dimethyl/methylhydrogen)siloxane,
C-II) trimethylsiloxy-terminated polymethylhydrogensiloxane,
C-III) dimethylhydrogensiloxy-terminated poly(dimethyl/methylhydrogen)siloxane,
C-IV) dimethylhydrogensiloxy-terminated polymethylhydrogensiloxane,
C-V) dimethylhydrogensiloxy-terminated polysilicate, and
C-VI) a combination of any two or more of C-I to C-V). The polyalkylhydrogensiloxane may be one polyalkylhydrogensiloxane or a combination of two or more polyalkylhydrogensiloxanes that differ in one or more properties selected from molecular weight, structure, siloxane units and sequence.

### (D) Hydrosilylation Reaction Catalyst

The polyorganosiloxane release coating composition described herein further comprises starting material (D) a hydrosilylation reaction catalyst in a catalytic amount. Hydrosilylation reaction catalysts are known in the art and are commercially available. Hydrosilylation reaction catalysts include i) platinum group metal catalysts. Such hydrosilylation reaction catalysts can be a metal selected from platinum, rhodium, ruthenium, palladium, osmium, and iridium. Alternatively, the hydrosilylation reaction catalyst may be a ii) compound of such a metal, for example, chloridotris(triphenylphosphane)rhodium(I) (Wilkinson's Catalyst), a rhodium diphosphine chelate such as [1,2-bis(diphenylphosphino)ethane]dichlorodirhodium or [1,2-bis(diethylphospino)ethane]dichlorodirhodium, chloroplatinic acid (Speier's Catalyst), chloroplatinic acid hexahydrate, platinum dichloride, and iii) complexes of said compounds with low molecular weight organopolysiloxanes or iv) platinum group metal compounds microencapsulated in a matrix or coreshell type structure. Complexes of platinum with low molecular weight organopolysiloxanes include 1,3-diethenyl-1,1,3,3-tetramethyldisiloxane complexes with platinum (Karstedt's Catalyst). These complexes may be microencapsulated in a resin matrix. Exemplary hydrosilylation reaction catalysts are described in U.S. Patents 3,159,601; 3,220,972; 3,296,291; 3,419,593; 3,516,946; 3,814,730; 3,989,668; 4,784,879; 5,036,117; and 5,175,325; and EP 0 347 895 B. Microencapsulated hydrosilylation reaction catalysts and methods of preparing them are known in the art, as exemplified in U.S. Patents 4,766,176 and 5,017,654. Hydrosilylation reaction catalysts are commercially available, for example, SYL-OFF^{™} 4000 Catalyst and SYL-OFF^{™} 2700 are available from Dow Silicones Corporation.

The hydrosilylation reaction catalyst is present in a catalytic amount, i.e., a sufficient amount to catalyze hydrosilylation reaction of the silicon bonded hydrogen atoms of starting material (C) with the alkenyl groups of starting materials (A) and (B). The exact amount of hydrosilylation reaction catalyst used herein will depend on various factors including the selection of starting materials (A), (B), and (C) and their respective contents of silicon bonded hydrogen atoms and alkenyl groups and the content of the platinum group metal in the catalyst selected, however, the amount of hydrosilylation reaction catalyst may be sufficient to provide 1 ppm to 6,000 ppm of the platinum group metal based on combined weights of starting materials (A), (B), and (C) combined; alternatively 1 ppm to 1,000 ppm, and alternatively 1 ppm to 150 ppm, on the same basis.

Alternatively, the hydrosilylation reaction catalyst may be selected from the group consisting of (D-1) a platinum group metal, (D-2) a compound of the platinum group metal, (D-3) a complex of the platinum group metal compound with an organopolysiloxane, (D-4) the compound of the platinum group metal microencapsulated in a matrix or coreshell type structure, and (D-5) the complex microencapsulated in a matrix or coreshell type structure. Alternatively, (D) the hydrosilylation reaction catalyst may comprise Karstedt's catalyst.

### (E) Hydrosilylation Reaction Inhibitor

The polyorganosiloxane release coating composition described herein further comprises starting material (E) a hydrosilylation reaction inhibitor (inhibitor) that may be used for altering rate of reaction of the silicon bonded hydrogen atoms of starting material (C) and the alkenyl groups of starting materials (A) and (B), as compared to reaction rate of the same starting materials but with the inhibitor omitted. Inhibitors are exemplified by acetylenic alcohols such as methyl butynol, ethynyl cyclohexanol, dimethyl hexynol, and 3,5-dimethyl-1-hexyn-3-ol, 1-butyn-3-ol, 1-propyn-3-ol, 2-methyl-3-butyn-2-ol, 3-methyl-1-butyn-3-ol, 3-methyl-1-pentyn-3-ol, 3-phenyl-1-butyn-3-ol, 4-ethyl-1-octyn-3-ol, 3,5-dimethyl-1-hexyn-3-ol, and 1-ethynyl-1-cyclohexanol, and a combination thereof; olefinic siloxanes such as cycloalkenylsiloxanes exemplified by methylvinylcyclosiloxanes exemplified by 1,3,5,7-tetramethyl-1,3,5,7-tetravinylcyclotetrasiloxane, 1,3,5,7-tetramethyl-1,3,5,7-tetrahexenylcyclotetrasiloxane, and a combination thereof; ene-yne compounds such as 3-methyl-3-penten-1-yne, 3,5-dimethyl-3-hexen-1-yne, and a combination thereof; triazoles such as benzotriazole; phosphines; mercaptans; hydrazines; amines, such as tetramethyl ethylenediamine, 3-dimethylamino-1-propyne, n-methylpropargylamine, propargylamine, and 1-ethynylcyclohexylamine; dialkyl fumarates such as diethyl fumarate, dialkenyl fumarates such as diallyl fumarate, dialkoxyalkyl fumarates, maleates such as diallyl maleate and diethyl maleate; nitriles; ethers; carbon monoxide; alkenes such as cyclo-octadiene, divinyltetramethyldisiloxane; alcohols such as benzyl alcohol; and a combination thereof. Exemplary olefinic siloxanes are disclosed, for example, in U.S. Patent 3,989,667. Exemplary acetylenic alcohols are disclosed, for example, in U.S. Patent 3,445,420. Alternatively, the inhibitor used in the polyorganosiloxane release coating described herein may comprise an acetylenic alcohol. Alternatively, the inhibitor may comprise 1-ethynyl-1-cychohexanol.

Alternatively, the inhibitor may be a silylated acetylenic compound. Without wishing to be bound by theory, it is thought that adding a silylated acetylenic compound reduces yellowing of the reaction product prepared from hydrosilylation reaction as compared to a reaction product from hydrosilylation of starting materials that do not include a silylated acetylenic compound or that include an organic acetylenic alcohol inhibitor, such as those described above.

The silylated acetylenic compound is exemplified by (3-methyl-1-butyn-3-oxy)trimethylsilane, ((1,1-dimethyl-2-propynyl)oxy)trimethylsilane, bis(3-methyl-1-butyn-3-oxy)dimethylsilane, bis(3-methyl-1-butyn-3-oxy)silanemethylvinylsilane, bis((1,1-dimethyl-2-propynyl)oxy)dimethylsilane, methyl(tris(1,1-dimethyl-2-propynyloxy))silane, methyl(tris(3-methyl-1-butyn-3-oxy))silane, (3-methyl-1-butyn-3-oxy)dimethylphenylsilane, (3-methyl-1-butyn-3-oxy)dimethylhexenylsilane, (3-methyl-1-butyn-3-oxy)triethylsilane, bis(3-methyl-1-butyn-3-oxy)methyltrifluoropropylsilane, (3,5-dimethyl-1-hexyn-3-oxy)trimethylsilane, (3-phenyl-1-butyn-3-oxy)diphenylmethylsilane, (3-phenyl-1-butyn-3-oxy)dimethylphenylsilane, (3-phenyl-1-butyn-3-oxy)dimethylvinylsilane, (3-phenyl-1-butyn-3-oxy)dimethylhexenylsilane, (cyclohexyl-1-ethyn-1-oxy)dimethylhexenylsilane, (cyclohexyl-1-ethyn-1-oxy)dimethylvinylsilane, (cyclohexyl-1-ethyn-1-oxy)diphenylmethylsilane, (cyclohexyl-1-ethyn-1-oxy)trimethylsilane, and combinations thereof. Alternatively, the silylated acetylenic compound is exemplified by methyl(tris(1,1-dimethyl-2-propynyloxy))silane, ((1,1-dimethyl-2-propynyl)oxy)trimethylsilane, or a combination thereof. The silylated acetylenic compound useful as the inhibitor herein may be prepared by methods known in the art, for example, U.S. Patent 6,677,740 discloses silylating an acetylenic alcohol described above by reacting it with a chlorosilane in the presence of an acid receptor.

The amount of inhibitor added herein will depend on various factors including the desired reaction rate, the particular inhibitor used, and the selection and amount of starting materials (A), (B), and (C). However, in accordance with the invention, the amount of inhibitor is 0.001 part by weight to 2 parts by weight, per 100 parts by weight of starting materials (A) and (B).

### (F) Anchorage Additive

The polyorganosiloxane release coating composition described herein further comprises starting material (F), an anchorage additive. Without wishing to be bound by theory, it is thought that the anchorage additive will facilitate bonding to a substrate by a release coating prepared by curing the polyorganosiloxane release coating composition described herein.

Suitable anchorage additives include silane coupling agents such as methyltrimethoxysilane, vinyltrimethoxysilane, allyltrimethoxysilane, 3-methacryloxypropyltrimethoxysilane, 3-aminopropyltrimethoxysilane, N-(2-aminoethyl)-3-aminopropyltrimethoxysilane, bis(trimethoxysilyl)propane, and bis(trimethoxysilyl)hexane; and mixtures or reaction mixtures of said silane coupling agents. Alternatively, the anchorage additive may be tetramethoxysilane, tetraethoxysilane, dimethyldimethoxysilane, methylphenyldimethoxysilane, methylphenyldiethoxysilane, phenyltrimethoxysilane, methyltrimethoxysilane, methyltriethoxysilane, vinyltriethoxysilane, allyltriethoxysilane, 3-glycidoxypropyltrimethoxysilane, 3-glycidoxypropyltriethoxysilane, -(3,4-epoxycyclohexyl)ethyltrimethoxysilane or 3-methacryloxypropyl trimethoxysilane.

Alternatively, the anchorage additive may be exemplified by a reaction product of an alkenyl-functional alkoxysilane (e.g., a vinyl alkoxysilane) and an epoxy-functional alkoxysilane; a reaction product of an alkenyl-functional acetoxysilane (such as vinyl acetoxysilane) and epoxy-functional alkoxysilane; and a combination (e.g., physical blend and/or a reaction product) of a polyorganosiloxane having at least one aliphatically unsaturated hydrocarbon group and at least one hydrolyzable group per molecule and an epoxy-functional alkoxysilane (e.g., a combination of a hydroxy-terminated, vinyl functional polydimethylsiloxane with glycidoxypropyltrimethoxysilane). Suitable anchorage additives and methods for their preparation are disclosed, for example, in U.S. Patent 9,562,149; U.S. Patent Application Publication Numbers 2003/0088042, 2004/0254274, 2005/0038188, 2012/0328863 at paragraph [0091], and U.S. Patent Publication 2017/0233612 at paragraph [0041]; and EP 0 556 023.

Anchorage additives are commercially available. For example, SYL-OFF^{™} 297, SYL-OFF^{™} 397, and SYL-OFF^{™} 9176 are available from Dow Silicones Corporation of Midland, Michigan, USAAnchorage additives which are in accordance with the invention include (F-1) vinyltriacetoxysilane, (F-2) glycidoxypropyltrimethoxysilane, (F-3) a combination of (F-1) and (F-2), (F-4) a combination of (F-3) and a polydimethylsiloxane terminated with hydroxyl groups, methoxy groups, or terminated with both a hydroxy group and a methoxy group, and (F-5) 2-(3,4-epoxycyclohexyl)ethyltrimethoxysilane. The combinations (F-3) and (F-4) may be physical blends and/or reaction products. Alternatively, the anchorage additive may comprise (F-5) 2-(3,4-epoxycyclohexyl)ethyltrimethoxysilane.

The amount of anchorage additive depends on various factors including the type of substrate to which the polyorganosiloxane release coating composition will be applied and whether a primer or other surface treatment will be used before application of the polyorganosiloxane release coating composition. However, in accordance with the invention the amount of anchorage additive is 0.01 part to 10 parts per 100 parts of starting materials (A) and (B), alternatively 0.2 part to 1 part, and alternatively 0.3 part to 0.6 part on the same basis.

### Starting Material (G) Solvent

The polyorganosiloxane release coating composition described herein may optionally further comprise starting material (G), a solvent. Suitable solvents include, polyalkylsiloxanes, alcohols, ketones, aromatic hydrocarbons, aliphatic hydrocarbons, glycol ethers, tetrahydrofuran, mineral spirits, naphtha, tetrahydrofuran, mineral spirits, naphtha, or a combination thereof. Polyalkylsiloxanes with suitable vapor pressures may be used as the solvent, and these include hexamethyldisiloxane, octamethyltrisiloxane, hexamethylcyclotrisiloxane and other low molecular weight polyalkylsiloxanes, such as 0.5 to 1.5 cSt DOWSIL^{™} 200 Fluids and DOWSIL^{™} OS FLUIDS, which are commercially available from Dow Silicones Corporation of Midland, Michigan, U.S.A.

Alternatively, starting material (G) may comprise an organic solvent. The organic solvent can be an alcohol such as methanol, ethanol, isopropanol, butanol, or n-propanol; a ketone such as acetone, methylethyl ketone, or methyl isobutyl ketone; an aromatic hydrocarbon such as benzene, toluene, or xylene; an aliphatic hydrocarbon such as heptane, hexane, or octane; a glycol ether such as propylene glycol methyl ether, dipropylene glycol methyl ether, propylene glycol n-butyl ether, propylene glycol n-propyl ether, or ethylene glycol n-butyl ether, tetrahydrofuran; mineral spirits; naphtha; or a combination thereof.

The amount of solvent will depend on various factors including the type of solvent selected and the amount and type of other starting materials selected for the curable polyorganosiloxane release coating composition. However, the amount of solvent of the invention is 0% to 96%, alternatively 2% to 50%, based on the weight of all starting materials in the polyorganosiloxane release coating composition. The solvent may be added during preparation of the polyorganosiloxane release coating composition, for example, to aid mixing and delivery of one or more starting materials. For example, the resin and/or the catalyst may be delivered in a solvent. All or a portion of the solvent may optionally be removed after the polyorganosiloxane release coating composition is prepared. Alternatively, a customer may dilute the polyorganosiloxane release coating composition after receipt and before use.

### (H) Anti-Mist Additive

Starting material (H) is an anti-mist additive that may be added to the polyorganosiloxane release coating composition to reduce or suppress silicone mist formation in coating processes, particularly with high speed coating equipment. The anti-mist additive may be a polyorganosiloxane comprising unit formula: (R¹₃SiO_{1/2})ₕ(R¹₂SiO_{2/2})ᵢ(R¹₂R²SiO_{1/2})ⱼ and (SiO_{4/2})ₖ, where R¹ and R² are as described above, subscript h > 0, subscript i > 0, subscript j > o, subscript k > 0, and a quantity (h + i + j + k) has a value sufficient to provide the branched polyorganosiloxane with a viscosity of 30,000 mPa·s to 50,000 mPa·s, alternatively from 35,000 mPa·s to 45,000 mPa·s at 25°C. Suitable anti-mist additives and methods for their preparation are known in the art, for example, in U.S. Patent Application 2011/0287267; U.S. Patent 8,722,153; U.S. Patent 6,805,914; U.S. Patent 6,586,535; U.S. Patent 6,489,407; and U.S. Patent 5,625,023.

The amount of anti-mist additive will depend on various factors including the amount and type of other starting materials selected for the polyorganosiloxane release coating composition. However, the amount of anti-mist additive may be 0% to 10%, alternatively 0.1% to 3%, based on the weight of all starting materials in the polyorganosiloxane release coating composition.

Optional starting materials which may also be added to the polyorganosiloxane release coating composition described herein include, for example, reactive diluents, fragrances, preservatives and fillers, for example, silica, quartz or chalk.

Alternatively, the polyorganosiloxane release coating composition may be free of filler or contains only a limited amount of filler, such as 0 to 30% by weight of the polyorganosiloxane release coating composition. Fillers can agglomerate or otherwise stick to the coater equipment used to apply the release coating. They can hinder optical properties, for example transparency, of the release coating and of the release liner formed therewith. The fillers may be prejudicial to the adherence of the adherend.

The polyorganosiloxane release coating composition may be free of conventional release modifiers that have been used in the past to control (decrease) the level of release force (the adhesive force between the release coating and an adherend thereto, such as a label including a pressure sensitive adhesive). Examples of such release modifiers include trimethylsiloxy-terminated dimethyl, phenylmethylsiloxanes. Without wishing to be bound by theory, it is thought that including a trimethylsiloxy-terminated dimethyl, phenylmethylsiloxanes in a release coating composition may lower subsequent adhesion strength and/or increase migration of the release coatings prepared therefrom. Therefore, the polyorganosiloxane release coating composition described herein may be free of polyorganosiloxanes that contain silicon bonded aryl groups (e.g., silicon bonded phenyl groups) other than starting material (A) described herein.

The curable polyorganosiloxane release coating composition may be free from fluoroorganosilicone compounds. It is believed that, during the cure, a fluorocompound, because of its low surface tension, will rapidly migrate to the interface of a coating composition and a substrate, for example a polyorganosiloxane release coating composition/PET film interface, and prevent adherence of the release coating (prepared by curing the polyorganosiloxane release coating composition) to the substrate by making a fluorine containing barrier. By making a barrier, the fluorocompound prevents any component from reacting at the interface. Moreover, fluorosilicone compounds are usually expensive.

### Method of Making Polyorganosiloxane Release Coating Composition and Release Liner

The polyorganosiloxane release coating composition of the present invention may be prepared by mixing the starting materials together, for example, to prepare a one part composition. However, it may be desirable to prepare the polyorganosiloxane release coating composition as a multiple part composition, in which the crosslinker and catalyst are stored in separate parts, until the parts are combined at the time of use (e.g., shortly before application to a substrate).

For example, a multiple part polyorganosiloxane release coating composition may comprise:
Part (A) a base part comprising the starting materials having silicon bonded alkenyl groups, i.e. starting materials (A) and (B); (D) the hydrosilylation reaction catalyst, and when present, (H) the anti-mist additive, and
Part (B) a curing agent part comprising (A) the polydiorganosiloxane and (C) the polyalkylhydrogensiloxane (crosslinker). Starting material (E), the hydrosilylation reaction inhibitor may be added to either Part (A), Part (B), or both. Starting material (F), the anchorage additive, can be incorporated in either of Part (A) or Part (B), or it can be added in a separate (third) part. When present, the (G) the solvent may be added to Part (A), Part (B), or both. Part (A) and Part (8) may be combined in a weight ratio (A):(B) of 1:1 to 10:1, alternatively 1:1 to 5:1, and alternatively 1:1 to 2:1. Part (A) and Part (B) may be provided in a kit with instructions for how to combine the parts to prepare the polyorganosiloxane release coating composition and/or how to apply the polyorganosiloxane release coating composition to a substrate.

A method for forming a release liner comprises:
1) combining starting materials comprising (A), (B), (C), (D), (E), and (F), and optionally one or more of (G) the solvent and (H) the anti-mist additive, thereby the polyorganosiloxane release coating composition as described above; and
2) applying the polyorganosiloxane release coating composition to a surface of a substrate.

The polyorganosiloxane release coating composition can for example be applied to the surface of the substrate by any convenient means such as spraying, doctor blade, dipping, screen printing or roll coating, by a roll coater, e.g. an offset web coater, kiss coater or etched cylinder coater.

The polyorganosiloxane release coating composition can be applied to a surface of any substrate, such as polymer film substrates, for example polyester, particularly polyethylene terephthalate (PET), polyethylene, polypropylene, or polystyrene films. The polyorganosiloxane release coating composition can alternatively be applied to a paper substrate, including plastic coated paper, for example paper coated with polyethylene, glassine, super calender paper, or clay coated kraft. The polyorganosiloxane release coating composition can alternatively be applied to a metal foil substrate, for example aluminum foil.

The method may further comprise: 3) treating the surface of the substrate before coating the polyorganosiloxane release coating composition on the surface of the substrate. Treating the surface of the substrate may be performed by any convenient means such as a plasma treatment or a corona discharge treatment. Alternatively, the surface of the substrate may be treated by applying a primer. In certain instances anchorage of the release coating may be improved if the surface of the substrate is treated before coating.

The method may further comprise: 4) removing solvent, which may be performed by any conventional means, such as heating at 50°C to 100°C for a time sufficient to remove all or a portion of the solvent. The method may further comprise: 5) curing the polyorganosiloxane release coating composition to form a release coating on the surface of the substrate. Curing may be performed by any conventional means such as heating at 100°C to 200°C.

Under production coater conditions cure can be affected in a residence time of 1 second to 60 seconds, alternatively 10 seconds to 60 seconds, alternatively 1 seconds to 30 seconds, alternatively 1 second to 6 seconds, and alternatively 1.5 seconds to 3 seconds, at an air temperature of 120°C to 160°C. Heating for steps 4) and/or 5) can be performed in an oven, e.g., an air circulation oven or tunnel furnace or by passing the coated film around heated cylinders.

The coat weight of the release coating may be 0.6 g/m² to 1.3 g/m², alternatively 0.6 g/m² to 0.8 g/m². Without wishing to be bound by theory, one benefit of the curable polyorganosiloxane release coating described herein is the ability to provide tight release force (e.g., > 100 g/inch at RT and > 200 g/inch at 70°C using tesa^{™} 7475 tape as tested by the method in Reference Example 3 (2) and (3) and high Subsequent Adhesive Strength (> 90% as tested by the method in Reference Example 3(4)) at low coat weights (e.g., 0.8 g/m² or less).

The release liners prepared as described above can be used to protect pressure sensitive adhesives. Customers may coat a liquid pressure sensitive adhesive composition directly on the release liner and remove the solvent or water by heat, alternatively by UV cure, then laminate with substrates and rewind to rolls. Alternatively, customers may laminate the release liner with dry pressure sensitive adhesive or sticky film for tapes, labels or die-cutting applications.

### EXAMPLES

The invention is further described below with reference to the following examples. The following abbreviations were used: RF: Release Force (Release Tester), CW: Coat Weight (Oxford XRF), RO: Rub Off (Anchorage performance), and SAS: Subsequent Adhesion Strength (Migration performance).

**Table 1, below, shows the starting materials used in these examples. Table 1**

| Starting Material | Description |
|---|---|
| (A1) Polymer 1 | mixture of 30% vinyl-functional polydimethylsiloxane qum and 70% toluene |
| (A2) Polymer 2 | vinyl-functional poly(dimethyl/methylphenyl)siloxane gum with Mn = 380,000 g/mol |
| (A3) Polymer 3 | vinyl-functional polydimethylsiloxane |
| (A4) Polymer 4 | vinyl functional poly(dimethyl/diphenyl)siloxane with Mn = 19,000 g/mol |
| (B1) Resin 1 | polyorganosilicate resin of formula M^{Vi}₁₅M₄₅Q₄₀ with Mn = 1,500 g/mol and 5.1% to 5.6% vinyl content and no detectable free silanol, where M |
| (C1) Crosslinker 1 | trimethylsiloxy-terminated poly(dimethyl/methylhydrogen)siloxane with viscosity of 70 mPa s |
| (C2) Crosslinker 2 | Dimethylhydrogensiloxy-modified silica of formula M^{H}_{1.82}Q having viscosity of 25 mPa s |
| (D1) Catalyst 1 | Karstedt's Catalyst |
| (E1) Inhibitor 1 | 1-ethynyl-1-cyclohexanol |
| (F1) Anchorage Additive 1 | alkoxy containing alkenyl/epoxy functional organopolysiloxane |

### Reference Example 1 - Preparation of Polyorganosiloxane Release Coating Compositions

Samples of polyorganosiloxane release coating compositions were prepared by adding starting material (A) the polydiorganosiloxane (having both alkenyl and aryl groups), starting material (E) the hydrosilylation reaction inhibitor, and, when present, starting material (G) the solvent to a vessel with mixing. Starting material (B) the polysiloxane resin was then added to the vessel. Starting material (C) the polyalkylhydrogensiloxane, starting material (F) the anchorage additive, and starting material (D) the hydrosilylation reaction catalyst were then added. The resulting polyorganosiloxane release coating composition is used as a coating bath. Reference Example 2 - Preparation of Release Liners

The polyorganosiloxane release coating compositions prepared according to Reference Example 1 were coated on PET substrates. The polyorganosiloxane release coating compositions were then cured at 140°C for 30 seconds to form release coatings on the substrates. The resulting release liners were then evaluated.

### Reference Example 3 - Release Coating Evaluation Procedures

(1) Coat weight (CW) in g/m² was evaluated using X-Ray to detect the coat weight of the release coating on the substrate with an Oxford lab-x 3500 instrument manufactured by Oxford Instruments PLC, Oxon, United Kingdom. Uncoated PET was used as a control sample (blank). The test method was FINAT Test Method No.7 (FINAT Technical Handbook 7th edition, 2005).
(2) Release force (RF-RT) in g/in was evaluated using the 180 degree peeling test to measure release force from the release liner. A tape was laminated on a cured release coating, a loaded weight of 20 g/cm² was placed on the laminated sample and left under RT for 20 hours. After 20 hours, the loaded weight was removed, and the sample was allowed to rest for 30 minutes. The release force was then tested by a Chemlnstruments AR-1500 using FINAT Test Method No.10 (FINAT Technical Handbook 7th edition, 2005). The following were tested: 7475 RF-RT refers to the above test method with tesa^{™} 7475 tape, which is commercially available from Tesa SE - A Beiersdorf Company. 'Hotmelt RF-RT' refers to the same method, but with a rubber base hotmelt tape from UPM Raflatac. 'WB Acrylic RF-RT' refers to the same test method, but with waterborne acrylic tape from UPM Raflatac.
(3) Release force (RF-70°C aging) in g/in was evaluated using the 180 degree peeling test to measure release force from the release liner. A tape was laminated on a cured release coating, a loaded weight of 20 g/cm² was placed on the laminated sample and left under 70°C for 20 hours. After 20 hours, the loaded weight was removed and the sample allowed to rest for 30 minutes. Release force was then tested by Chemlnstruments AR-1500 using FINAT Test Method No.10 (FINAT Technical Handbook 7th edition, 2005). The following were tested: 7475 RF-70°C refers to the above test method with tesa^{™} 7475 tape. 'Hotmelt RF-70°C' refers to the same method, but with a rubber base hotmelt tape from UPM Raflatac. 'WB Acrylic RF-70°C' refers to the same test method, but with waterborne acrylic tape from UPM Raflatac.
(4) SAS (Subsequent Adhesive Strength, indicator of migration) in % was evaluated as follows. A test tape was laminated by Nitto Denko 31B tape on a cured release coating under a loaded weight of 20 g/cm² and left under 70°C for 20 hours. After 20 hours, the loaded weight was removed and the sample was allowed to rest 30 minutes at room temperature. Then transfer the 31B tape on PET substrate and wait for another 1 hour. The release force was tested by Chemlnstruments AR-1500 using FINAT Test Method No.11 (FINAT Technical Handbook 7th edition, 2005). In this SAS test, a laminate 31B tape on a PTFE substrate was tested, and the PTFE sample was treated the same way as a cured release coating sample. The SAS value was recorded as RFᵣₑₗₑₐₛₑ/RF_{PTFE}×100%.

The starting materials used in each sample prepared according to Reference Example 1 are shown below in Tables 2 and 3. Amounts of each starting material are in weight parts, except amount of catalyst (C1) is sufficient to provide the amount of platinum shown, in ppm. The results of evaluations according to Reference Example 3 are shown below in Tables 4-7.

**Table 2 - Starting Materials for Samples with Poly(dimethyl/methylphenyl)siloxane**

| Starting Material | C1 | C2 | C3 | C4 | C5 | C6 | W1 | W2 | W3 | W4 |
|---|---|---|---|---|---|---|---|---|---|---|
| (A1) | 100 | 87.50 | 75 | 62.5 | 50 | 0 | 0 | 0 | 0 | 0 |
| (A2) | 0 | 0 | 0 | 0 | 0 | 100 | 87.5 | 75 | 62.5 | 50 |
| (B1) | 0 | 3.75 | 7.5 | 11.25 | 15 | 0 | 12.5 | 25 | 37.5 | 50 |
| (E1) | 0 | 0.06 | 0.06 | 0.06 | 0.06 | 0.2 | 0.2 | 0.2 | 0.2 | 0.2 |
| (F1) | 0.32 | 0.32 | 0.32 | 0.32 | 0.32 | 0.6 | 0.6 | 0.6 | 0.6 | 0.6 |
| (C1) | 0.6 | 1.44 | 2.42 | 3.41 | 4.51 | 0.48 | 3.79 | 7.02 | 10.54 | 14.04 |
| (D1) | 140 | 140 | 140 | 140 | 140 | 140 | 140 | 140 | 140 | 140 |
| SiH/Vi Ratio | 2.3 | 1.7 | 1.7 | 1.7 | 1.7 | 2.8 | 1.7 | 1.7 | 1.7 | 1.7 |

**Table 3 - Starting Materials for Samples with Poly(dimethyl/diphenyl)siloxane**

| Starting Material | C7 | C8 | C9 | W5 | W6 |
|---|---|---|---|---|---|
| (A3) | 100 | 50 | 0 | 0 | 0 |
| (A4) | 0 | 0 | 100 | 75 | 50 |
| (B1) | 0 | 50 | 0 | 25 | 50 |
| (E1) | 0 | 0.2 | 0.2 | 0.36 | 0.52 |
| (F1) | 0.6 | 0.6 | 0.6 | 0.6 | 0.6 |
| (C1) | 1.84 | 0.92 | 0 | 0 | 0 |
| (C2) | 0 | 15 | 2.1 | 8.8 | 16.4 |
| (D1) | 100 | 100 | 100 | 100 | 100 |
| SiH/Vi Ratio | 1.7 | 1.7 | 1.7 | 1.7 | 1.7 |

**Table 4 - Fresh Sample Evaluation Results, for the Comparative Samples in Table 2**

| Test | Units | C1 | C2 | C3 | C4 | C5 | C6 |
|---|---|---|---|---|---|---|---|
| C/W | g/m² | 0.625 | 0.625 | 0.671 | 0.612 | 0.625 | 0.569 |
| 7475 RF-RT | g/in | 5.3 | 7.9 | 12.9 | 28.6 | 67.1 | 6.5 |
| 7475 RF-70C | g/in | 7.7 | 14.9 | 26.1 | 50.9 | 102.7 | 14.9 |
| Hotmelt RF-RT | g/in | 2.1 | 2.2 | 6.0 | 42.6 | 194.3 | 1.5 |
| Hotmelt RF-70C | g/in | 2.6 | 2.9 | 8.3 | 38.4 | 193.4 | 2.4 |
| WB Acrylic RF-RT | g/in | 5.8 | 6.2 | 10.7 | 44.1 | 169.6 | 1.9 |
| WB Acrylic RF-70C | g/in | 6.1 | 6.4 | 12.5 | 47.7 | 187.1 | 3.8 |
| SAS | % | 94.8 | 95.5 | 93.5 | 95.2 | 91.8 | 90.1 |

**Table 4 (continued) - Fresh Sample Evaluation Results, for the Working Samples in Table 2**

| Test | Units | W1 | W2 | W3 | W4 |
|---|---|---|---|---|---|
| C/W | g/m² | 0.692 | 0.672 | 0.659 | 0.659 |
| 7475 RF-RT | g/in | 114.8 | 187.5 | 264.6 | 396.8 |
| 7475 RF-70C | g/in | 210.3 | 337.1 | 545.7 | 709.7 |
| Hotmelt RF-RT | g/in | 29.1 | 195.1 | 258.7 | 281.7 |
| Hotmelt RF-70C | g/in | 21.6 | 166.8 | 236.6 | 267.1 |
| WB Acrylic RF-RT | g/in | 98.5 | 279.8 | 330.9 | 336.1 |
| WB Acrylic RF-70C | g/in | 60.8 | 235.5 | 304.5 | 300.3 |
| SAS | % | 96.7 | 96.6 | 96.7 | 92.1 |

**Table 5- Fresh Sample Evaluation Results, for the Samples in Table 3**

| Test | Units | C7 | C8 | C9 | W5 | W6 |
|---|---|---|---|---|---|---|
| C/W | g/m² | 0.757 | 0.762 | 0.725 | 0.766 | 0.778 |
| 7475 RF-RT | g/in | 7.3 | 32.9 | 35.9 | 417.2 | 812.1 |
| 7475 RF-70C | g/in | 8.4 | 51.2 | 62.7 | 735.0 | 1311.9 |
| Hotmelt RF-RT | g/in | 2.2 | 83.2 | 10.1 | 167.0 | 370.0 |
| Hotmelt RF-70C | g/in | 2.9 | 73.8 | 14.2 | 142.8 | 343.4 |
| WB Acrylic RF-RT | g/in | 3.0 | 86.4 | 22.3 | 251.0 | 364.9 |
| WB Acrylic RF-70C | g/in | 3.3 | 48.7 | 12.8 | 238.3 | 354.8 |
| SAS | % | 90.2 | 94.2 | 94.0 | 90.4 | 94.0 |

**Table 6-3 Months Aged Sample Evaluation Results, for the samples in Table 2**

| Test | Units | C1 | C2 | C3 | C4 | C5 | C6 | W1 | W2 | W3 | W4 |
|---|---|---|---|---|---|---|---|---|---|---|---|
| 7475 RF-RT | g/in | 5.2 | 6.2 | 11.3 | 23.6 | 65.3 | 7.7 | 112.0 | 213.9 | 284.2 | 371.2 |
| 7475 RF-70C | g/in | 7.2 | 11.2 | 28.2 | 55.9 | 108.8 | 16.6 | 158.9 | 396.3 | 507.5 | 650.6 |
| Hotmelt RF-RT | g/in | 2.1 | 2.5 | 6.1 | 40.1 | 197.7 | 2.3 | 25.2 | 146.6 | 240.3 | 262.0 |
| Hotmelt RF-70C | g/in | 2.6 | 3.4 | 10.8 | 47.4 | 211.6 | 5.5 | 25.2 | 135.5 | 225.2 | 270.6 |
| WB Acrylic RF-RT | g/in | 3.9 | 3.8 | 9.9 | 25.7 | 207.3 | 3.7 | 47.5 | 263.1 | 356.8 | 387.2 |
| WB Acrylic RF-70C | g/in | 3.8 | 4.5 | 11.4 | 34.8 | 249.9 | 5.1 | 33.9 | 212.0 | 328.1 | 1469.3 |

**Table 7 - 3 Months Aged Sample Evaluation Results, for the samples in Table 3.**

| Test | Units | C7 | C8 | C9 | W5 | W6 |
|---|---|---|---|---|---|---|
| 7475 RF-RT | g/in | 7.0 | 34.7 | 42.0 | 367.4 | 746.9 |
| 7475 RF-70C | g/in | 9.1 | 56.5 | 67.6 | 765.3 | 1166.2 |
| Hotmelt RF-RT | g/in | 1.2 | 61.8 | 10.9 | 156.1 | 327.0 |
| Hotmelt RF-70C | g/in | 2.8 | 81.0 | 20.9 | 154.6 | 325.3 |
| WB Acrylic RF-RT | g/in | 2.7 | 46.1 | 20.1 | 243.9 | 369.6 |
| WB Acrylic RF-70C | g/in | 2.5 | 47.6 | 17.3 | 229.6 | 370.1 |

### INDUSTRIAL APPLICABILITY

The working examples (W) above showed that release coatings (on PET substrates) can be prepared with coat weights of 0.659 g/m² to 0.778 g/m²; release force from tesa^{™} 7475 standard tape after aging at room temperature of 114.8 g/in to 812.1 g/in, release force from tesa^{™} 7475 standard tape after aging at 70°C of 210 g/in to 1312 g/in, and sustained adhesion strength of > 90% to 97%.

The working examples and comparative examples (C) above showed that release liners including release coatings prepared from the polyorganosiloxane release coating compositions disclosed herein had consistently higher release force than the comparative examples. For example, Working Examples W1 to W4 each had higher release force from 7475 at RT than Comparative Examples C1 to C6, with both freshly prepared samples and samples that were aged for 3 months (see Tables 4 and 6). Working Examples W1 to W4 each had higher release force from 7475 at 70°C than Comparative Examples C1 to C6, with both freshly prepared samples and samples that were aged for 3 months (see Tables 4 and 6).

Furthermore, the release coatings in Working Examples W5 and W6 had higher release force than Comparative Examples 7 and 8 under all conditions tested (see Tables 5 and 7).

### DEFINITIONS AND USAGE OF TERMS

Unless otherwise indicated by the context of the specification: all amounts, ratios, and percentages herein are by weight; the articles 'a', 'an', and 'the' each refer to one or more; and the singular includes the plural. The SUMMARY and ABSTRACT are hereby incorporated by reference. The transitional phrases "comprising", "consisting essentially of", and "consisting of" are used as described in the Manual of Patent Examining Procedure Ninth Edition, Revision 08.2017, Last Revised January 2018 at section §2111.03 I., II., and III. The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples. The abbreviations used herein have the definitions in Table 8.

**Table 8 - Abbreviations**

| Abbreviation | Definition |
|---|---|
| °C | degrees Celsius |
| cm | centimeters |
| FTIR | Fourier Transform Infra Red |
| g | grams |
| g/cm² | grams per square centimeter |
| q/in | grams per inch |
| g/m² | grams per square meter |
| GPC | gel permeation chromatography |
| M | a siloxane unit of formula (Me₃SiO_{1/2}) |
| Me | methyl |
| M^{H} | a siloxane unit of formula (Me₂HSiO_{1/2}) |
| min | minutes |
| Mn | number average molecular weight |
| mPa.s | milli Pascal -seconds |
| M^{Vi} | a siloxane unit of formula (Me₂ViSiO_{1/2}) |
| N | normal |
| NMR | nuclear magnetic resonance |
| PTFE | polytetrafluoroethylene |
| PET | polyethylene terephthalate |
| Q | a siloxane unit of formula (SiO_{4/2}) |
| RPM | revolutions per minute |
| RT | room temperature of 20°C to 25°C |
| Vi | vinyl |
| Vi-terminated PDMS | bis-vinyl-terminated polydimethylsiloxane |

The following test methods were used to measure properties of the starting materials herein.

Viscosity of each polydiorganosiloxane was measured at 0.1 to 50 RPM on a Brookfield DV-III cone & plate viscometer with #CP-52 spindle. One skilled in the art would recognize that rotation rate decreases as viscosity increases and would be able to select the appropriate rotation rate when using this test method to measure viscosity.

²⁹Si NMR and ¹³C NMR spectroscopy can be used to quantify the R group (e.g., R¹, R², and/or R³) group content in a polydiorganosiloxane. A ²⁹Si NMR spectrum should be acquired using the methodology outlined by Taylor et. al. in Chapter 12 of The Analytical Chemistry of Silicones, ed. A. Lee Smith, Vol. 112 in Chemical Analysis, John Wiley & Sons, Inc. (1991), pages 347-417, and section 5.5.3.1. In this chapter, the authors discuss general parameters unique to acquiring quantitative NMR spectra from Silicon nuclei. Each NMR spectrometer is different with respect to the electronic components, capabilities, sensitivity, frequency and operating procedures. One should consult instrument manuals for the spectrometer to be used in order to tune, shim and calibrate a pulse sequences sufficient for quantitative 1D measurement of ²⁹Si and ¹³C nuclei in a sample.

A key output of a NMR analysis is the NMR spectrum. Without standards, it is recommended that the signal to noise ratio of signal height to average baseline noise be no less than 10:1 to be considered quantitative. A properly acquired and processed NMR spectrum results in signals that can be integrated using any commercially available NMR processing software package.

From these integrations, the weight percent of total R group content can be calculated from the ²⁹Si NMR spectrum according to the following: (I^{M}) · (U^{M}) = G^{M}; (I^{M(R)}) · (U^{M(R')}) = G^{M(R)}; (I^{D}) . (U^{D}) = G^{D}; (I^{D(R)}) . (U^{D(R)}) = G^{D(R)}; U^{R} / U^{M(R)} = Y^{R'}; U^{R} / U^{D(R)} = Y^{R"} ; Y^{R"} . [G^{M(R)} / (G^{M} + G^{M(R)} + G^{D} + G^{D(R)}) . 100] = W^{R'}; Y^{R‴} . [G^{D(R)} / (G^{M} + G^{M(R)} + G^{D} + G^{D(R)}) . 100] = W^{R"}; and W^{R'} + W^{R"} = TOTAL W^{R}; where I is the integrated signal of the indicated siloxy group; U is the unit molecular weight of the indicated siloxy group; G is a placeholder representing the grams unit; W is the weight percent of the indicated siloxy unit; Y is a ratio value for the specified siloxy unit; R is as described above; R' represents R groups only from M(R); and R" represents R groups only from D(R) groups.

Number average molecular weight of polyorganosiloxane starting materials (e.g., starting materials (A), (B), and (C) described herein) may be measured by GPC according to the test method in U.S. Patent 9,593,209, Reference Example 1 at col. 31.

## Claims

1. A polyorganosiloxane release coating composition comprising:
(A) a polydiorganosiloxane of unit formula: (R¹₂R²SiO_{1/2})ₐ(R¹₂SiO_{2/2})_{b}(R¹R³SiO_{2/2})_{c}(R³₂SiO_{2/2})_{d}, where each R¹ is an independently selected alkyl group of 1 to 18 carbon atoms, each R² is an independently selected alkenyl group of 2 to 18 carbon atoms, each R³ is an independently selected aryl group of 5 to 20 carbon atoms, subscript a has an average value of 2, subscript b > 0, subscript c ≥ 0, subscript d ≥ 0 with the proviso that a quantity (c + d) > 0, and a quantity (a + b + c + d) is sufficient to give the polydiorganosiloxane a number average molecular weight ≥ 3,000 g/mol;
(B) a polyorganosilicate resin having silicon bonded alkenyl groups,
(C) a polyalkylhydrogensiloxane, having at least two silicon-bonded hydrogen atoms per a molecule, where the polyalkylhydrogensiloxane is present in an amount sufficient to provide 0.8 mole to 5 moles of silicon-bonded hydrogen atoms per mole of alkenyl groups in starting materials (A) and (B);
(D) a hydrosilylation reaction catalyst in a catalytic amount;
(E) a hydrosilylation reaction inhibitor, in an amount of 0.001 part by weight to 2 parts by weight, per 100 parts by weight of starting materials (A) and (B);
(F) an anchorage additive, selected from the group consisting of (F-1) vinyltriacetoxysilane, (F-2) glycidoxypropyltrimethoxysilane, (F-3) a combination of (F-1) and (F-2), (F-4) a combination of (F-3) and a polydimethylsiloxane terminated with hydroxyl groups, methoxy groups, or terminated with both a hydroxy group and a methoxy group, and (F-5) 2-(3,4-epoxycyclohexyl)ethyltrimethoxysilane, in an amount of 0.01 part by weight to 10 parts by weight per 100 parts by weight of starting materials (A) and (B); and
optionally (G) a solvent;
where the composition is free of polydiorganosiloxanes that do not have silicon bonded aryl groups, other than starting material (A).

2. The composition of claim 1, where in starting material (A), the polydiorganosiloxane, each R¹ is methyl, each R² is vinyl, and each R³ is phenyl.

3. The composition of claim 1 or claim 2, where in starting material (A), the polydiorganosiloxane, subscript c = 0, and subscript d > 0, and subscript d has a value sufficient to provide the polydiorganosiloxane with a Mn of 3,000 g/mol to 500,000 g/mol.

4. The composition of any one of claims 1 to 3, where in (B) the polyorganosilicate resin comprises unit formula: (R¹₃SiO_{1/2})ₑ(R¹₂R²SiO_{1/2})_{f}(SiO_{4/2})_{g}, where R¹ and R² are as described above and subscripts m, n and o have average values such that e ≥ 0, f ≥ 0, g > 1, and (e + f) > 4, with the proviso that a quantity (e + f + g) is sufficient to give the polyorganosilicate resin a number average molecular weight of 1,000 g/mol to 8,000 g/mol.

5. The composition of any one of claims 1 to 4, where (C) the polyalkylhydrogensiloxane comprises unit formula (C1): (R¹₃SiO_{1/2})ₘ(R¹HSiO_{2/2})ₙ(R¹₂SiO_{2/2})ₒ(R¹₂HSiO_{1/2})ₚ, where subscript m is 0 to 2, subscript p is 0 to 2, a quantity (m + p) has an average value of 2, subscript n > 0, subscript o > 0, a quantity (n + p) ≥ 3, and a quantity (m + n + o + p) has a value sufficient to give the polyalkylhydrogensiloxane a viscosity of 5 mPa s to 500 mPa s measured at 25°C at 0.1 to 50 RPM on a Brookfield DV-III cone & plate viscometer with #CP-52 spindle.

6. The composition of any one of claims 1 to 4, where (C) the polyalkylhydrogensiloxane comprises unit formula (C2): (HR¹₂SiO_{1/2})ᵣ(SiO_{4/2})_{q}, where subscripts q and r are present in a molar ratio r/q of 0.5/1 to 2/1 and a quantity (q + r) has a value sufficient to give the polyalkylhydrogensiloxane a viscosity of 5 mPa s to 200 mPa s.

7. The composition of any one of claims 1 to 6, where (D) the hydrosilylation reaction catalyst is selected from the group consisting of (D-1) a platinum group metal, (D-2) a compound of the platinum group metal, (D-3) a complex of the platinum group metal compound with an organopolysiloxane, (D-4) the compound of the platinum group metal microencapsulated in a matrix or coreshell type structure, and (D-5) the complex microencapsulated in a matrix or coreshell type structure.

8. The composition of claim 7, where (D) the hydrosilylation reaction catalyst comprises Karstedt's catalyst.

9. The composition of any one of claims 1 to 8, where starting material (E), the hydrosilylation reaction inhibitor, comprises an acetylenic alcohol.

10. The composition of claim 9, where the acetylenic alcohol comprises 1-ethynyl-1-cychohexanol.

11. The composition of claim 1, where the anchorage additive comprises 2-(3,4-epoxycyclohexyl)ethyltrimethoxysilane.

12. The composition of any one of claims 1 to 11, where starting material (G), the solvent, is present in an amount up to 96 weight% based on combined weights of all starting materials in the composition, and the solvent comprises an aromatic hydrocarbon.

13. A method for preparing a release liner comprising:
1) coating the composition of any one of claims 1 to 12 on a surface of a substrate, and
2) curing the composition to form a release coating on the surface of the substrate.

14. A release liner prepared by the method of claim 13.

## Patentansprüche

1. Polyorganosiloxantrennbeschichtungszusammensetzung, umfassend:
(A) ein Polydiorganosiloxan von Einheitsformel:
(R¹₂R²SiO_{1/2})ₐ(R¹₂SiO_{2/2})_{b}(R¹R³SiO_{2/2})_{c}(R³₂SiO_{2/2})_{d'} wobei jedes R¹ eine unabhängig ausgewählte Alkylgruppe mit 1 bis 18 Kohlenstoffatomen ist, jedes R² eine unabhängig ausgewählte Alkenylgruppe mit 2 bis 18 Kohlenstoffatomen ist, jedes R³ eine unabhängig ausgewählte Arylgruppe mit 5 bis 20 Kohlenstoffatomen ist, Index a einen Durchschnittswert von 2 aufweist, Index b > 0, Index c ≥ 0, Index d ≥ 0 mit der Maßgabe, dass eine Menge (c + d ) > 0 und eine Menge (a + b + c + d) ausreichend ist, um dem Polydiorganosiloxan ein zahlenmittleres Molekulargewicht ≥ 3.000 g/mol zu verleihen;
(B) ein Polyorganosilicatharz, das siliciumgebundene Alkenylgruppen aufweist,
(C) ein Polyalkylhydrogensiloxan, das mindestens zwei siliciumgebundene Wasserstoffatome pro Molekül aufweist, wobei das Polyalkylhydrogensiloxan in einer Menge vorhanden ist, die ausreichend ist, um 0,8 Mol bis 5 Mole siliciumgebundene Wasserstoffatome pro Mol von Alkenylgruppen in Ausgangsmaterialien (A) und (B) bereitzustellen;
(D) einen Hydrosilylierungsreaktionskatalysator in einer katalytischen Menge;
(E) einen Hydrosilylierungsreaktionsinhibitor, in einer Menge von 0,001 Gewichtsteilen bis 2 Gewichtsteilen, pro 100 Gewichtsteile von Ausgangsmaterialien (A) und (B);
(F) ein Verankerungsadditiv, das aus der Gruppe ausgewählt ist, bestehend aus (F-1) Vinyltriacetoxysilan, (F-2) Glycidoxypropyltrimethoxysilan, (F-3) einer Kombination aus (F-1) und (F-2), (F-4) einer Kombination aus (F-3) und einem Polydimethylsiloxan, das mit Hydroxylgruppen, Methoxygruppen terminiert ist oder mit sowohl einer Hydroxygruppe als auch einer Methoxygruppe terminiert ist, und (F-5) 2-(3,4-Epoxycyclohexyl)ethyltrimethoxysilan, in einer Menge von 0,01 Gewichtsteilen bis 10 Gewichtsteilen pro 100 Gewichtsteile von Ausgangsmaterialien (A) und (B); und
optional (G) ein Lösungsmittel;
wobei die Zusammensetzung frei von Polydiorganosiloxanen, die keine siliciumgebundenen Arylgruppen aufweisen, außer Ausgangsmaterial (A) ist.

2. Zusammensetzung nach Anspruch 1, wobei in Ausgangsmaterial (A), dem Polydiorganosiloxan, jedes R¹ Methyl ist, jedes R² Vinyl ist und jedes R³ Phenyl ist.

3. Zusammensetzung nach Anspruch 1 oder 2, wobei in Ausgangsmaterial (A), dem Polydiorganosiloxan, Index c = 0 und Index d > 0, und Index d einen Wert aufweist, der ausreichend ist, um das Polydiorganosiloxan mit einem Mn von 3.000 g/mol bis 500.000 g/mol bereitzustellen.

4. Zusammensetzung nach einem der Ansprüche 1 bis 3, wobei in (B) das Polyorganosilicatharz die Einheitsformel umfasst:
(R¹₃SiO_{1/2})ₑ(R¹₂R²SiO_{1/2})_{f}(SiO_{4/2})_{g}, wobei R¹ und R² wie oben beschrieben sind und Indizes m, n und o Durchschnittswerte derart aufweisen, dass e ≥ 0, f ≥ 0, g > 1 und (e + f) > 4, mit der Maßgabe, dass eine Menge (e + f + g) ausreichend ist, um dem Polyorganosilicatharz ein zahlenmittleres Molekulargewicht von 1.000 g/mol bis 8.000 g/mol zu verleihen.

5. Zusammensetzung nach einem der Ansprüche 1 bis 4, wobei (C), das Polyalkylhydrogensiloxan, die Einheitsformel (C1) umfasst:
(R¹₃SiO_{1/2})ₘ(R¹HSiO_{2/2})ₙ(R¹₂SiO_{2/2})ₒ(R¹₂HSiO_{1/2})ₚ, wobei Index m 0 bis 2 ist, Index p 0 bis 2 ist, eine Menge (m + p) einen Durchschnittswert von 2 aufweist, Index n > 0, Index o > 0, eine Menge (n + p) ≥ 3 und eine Menge (m + n + o + p) einen Wert aufweist, der ausreichend ist, um dem Polyalkylhydrogensiloxan eine Viskosität von 5 mPa·s bis 500 mPa·s, gemessen bei 25 °C bei 0,1 bis 50 U/min auf einem Brookfield DV-III Kegel- & Platte-Viskosimeter mit Spindel #CP-52, zu verleihen.

6. Zusammensetzung nach einem der Ansprüche 1 bis 4, wobei (C), das Polyalkylhydrogensiloxan, die Einheitsformel (C2) umfasst: (HR¹₂SiO_{1/2})ᵣ(SiO_{4/2})_{q}, wobei Indizes q und r in einem Molverhältnis r/q von 0,5/1 bis 2/1 vorhanden sind und eine Menge (q + r) einen Wert aufweist, der ausreichend ist, um dem Polyalkylhydrogensiloxan eine Viskosität von 5 mPa·s bis 200 mPa·s zu verleihen.

7. Zusammensetzung nach einem der Ansprüche 1 bis 6, wobei (D), der Hydrosilylierungsreaktionskatalysator, aus der Gruppe ausgewählt ist, bestehend aus (D-1) einem Platingruppenmetall, (D-2) einer Verbindung des Platingruppenmetalls, (D-3) einem Komplex der Platingruppenmetallverbindung mit einem Organopolysiloxan, (D-4) der Verbindung des Platingruppenmetalls, mikroverkapselt in einer Matrix- oder Kern-Schale-artigen Struktur, und (D-5) dem Komplex, mikroverkapselt in einer Matrix- oder Kern-Schale-artigen Struktur.

8. Zusammensetzung nach Anspruch 7, wobei (D), der Hydrosilylierungsreaktionskatalysator, einen Karstedt-Katalysator umfasst.

9. Zusammensetzung nach einem der Ansprüche 1 bis 8, wobei Ausgangsmaterial (E), der Hydrosilylierungsreaktionsinhibitor, einen acetylenischen Alkohol umfasst.

10. Zusammensetzung nach Anspruch 9, wobei der acetylenische Alkohol 1-Ethinyl-1-cychohexanol umfasst.

11. Zusammensetzung nach Anspruch 1, wobei das Verankerungsadditiv 2-(3,4-Epoxycyclohexyl)ethyltrimethoxysilan umfasst.

12. Zusammensetzung nach einem der Ansprüche 1 bis 11, wobei Ausgangsmaterial (G), das Lösungsmittel, in einer Menge von bis zu 96 Gew.-%, basierend auf kombinierten Gewichten aller Ausgangsmaterialien in der Zusammensetzung, vorhanden ist und das Lösungsmittel einen aromatischen Kohlenwasserstoff umfasst.

13. Verfahren zum Herstellen einer Trennlage, umfassend:
1) Aufbringen der Zusammensetzung nach einem der Ansprüche 1 bis 12 auf die Oberfläche des Substrats und
2) Härten der Zusammensetzung, um eine Trennbeschichtung auf der Oberfläche des Substrats auszubilden.

14. Trennlage, die durch das Verfahren nach Anspruch 13 hergestellt wird.

## Revendications

1. Composition de revêtement antiadhésif de polyorganosiloxane comprenant :
(A) un polydiorganosiloxane de formule unitaire :
(R¹₂R²SiO_{1/2})ₐ(R¹₂SiO_{2/2})_{b}(R¹R³SiO_{2/2})_{c}(R³₂SiO_{2/2})_{d}, où chaque R¹ est un groupe alkyle choisi indépendamment de 1 à 18 atomes de carbone, chaque R² est un groupe alcényle choisi indépendamment de 2 à 18 atomes de carbone, chaque R³ est un groupe aryle choisi indépendamment de 5 à 20 atomes de carbone, l'indice a une valeur moyenne de 2, l'indice b > 0, l'indice c ≥ 0, l'indice d ≥ 0 à la condition qu'une quantité (c + d) > 0, et qu'une quantité (a + b + c + d) soit suffisante pour donner au polydiorganosiloxane une masse moléculaire moyenne en nombre ≥ 3 000 g/mol ;
(B) une résine polyorganosilicate ayant des groupes alcényle liés à du silicium,
(C) un polyalkylhydrogénosiloxane, ayant au moins deux atomes d'hydrogène liés à du silicium par molécule, où le polyalkylhydrogénosiloxane est présent en une quantité suffisante pour fournir 0,8 mole à 5 moles d'atomes d'hydrogène liés à du silicium par mole de groupes alcényle dans des matières premières (A) et (B) ;
(D) un catalyseur de réaction d'hydrosilylation en une quantité catalytique ;
(E) un inhibiteur de réaction d'hydrosilylation, en une quantité de 0,001 partie en poids à 2 parties en poids, pour 100 parties en poids de matières premières (A) et (B) ;
(F) un additif d'ancrage, choisi dans le groupe constitué de (F-1) vinyltriacétoxysilane, (F-2) glycidoxypropyltriméthoxysilane, (F-3) une combinaison de (F-1) et (F-2), (F-4) une combinaison de (F-3) et d'un polydiméthylsiloxane terminé par des groupes hydroxyle, groupes méthoxy, ou terminés à la fois par un groupe hydroxy et un groupe méthoxy, et (F-5) 2-(3,4-époxycyclohexyl)éthyltriméthoxysilane, en une quantité de 0,01 partie en poids à 10 parties en poids pour 100 parties en poids de matières premières (A) et (B) ; et
facultativement (G) un solvant ;
où la composition est exempte de polydiorganosiloxanes qui n'ont pas de groupes aryle liés à du silicium, autres que la matière première (A).

2. Composition selon la revendication 1, où dans la matière première (A), le polydiorganosiloxane, chaque R¹ est méthyle, chaque R² est vinyle, et chaque R³ est phényle.

3. Composition selon la revendication 1 ou la revendication 2, où dans la matière première (A), le polydiorganosiloxane, l'indice c = 0, et l'indice d > 0, et l'indice d a une valeur suffisante pour fournir au polydiorganosiloxane une Mn de 3 000 g/mol à 500 000 g/mol.

4. Composition selon l'une quelconque des revendications 1 à 3, où dans (B) la résine polyorganosilicate comprend la formule unitaire :
(R¹₃SiO_{1/2})ₑ(R¹₂R²SiO_{1/2})_{f}(SiO_{4/2})_{g}, où R¹ et R² sont tels que décrits ci-dessus et les indices m, n et o ont des valeurs moyennes telles que e ≥ 0, f ≥ 0, g > 1, et (e + f) > 4, à condition qu'une quantité (e + f + g) soit suffisante pour donner à la résine polyorganosilicate une masse moléculaire moyenne en nombre de 1 000 g/mol à 8 000 g/mol.

5. Composition selon l'une quelconque des revendications 1 à 4, où (C) le polyalkylhydrogénosiloxane comprend la formule unitaire (C1) :
(R¹₃SiO_{1/2})ₘ(R¹HSiO_{2/2})ₙ(R¹₂SiO_{2/2})ₒ(R¹₂HSiO_{1/2})ₚ, où l'indice m vaut de 0 à 2, l'indice p vaut de 0 à 2, une quantité (m + p) a une valeur moyenne de 2, l'indice n > 0, indice o > 0, une quantité (n + p) ≥ 3, et une quantité (m + n + o + p) a une valeur suffisante pour donner au polyalkylhydrogénosiloxane une viscosité de 5 mPa·s à 500 mPa s mesurée à 25 °C à 0,1 à 50 tr/min sur un viscosimètre à cône et plaque Brookfield DV-III avec un mobile #CP-52.

6. Composition selon l'une quelconque des revendications 1 à 4, où (C) le polyalkylhydrogénosiloxane comprend la formule unitaire (C2) :
(HR¹₂SiO_{1/2})ᵣ(SiO_{4/2})_{q}, où les indices q et r sont présents en un rapport molaire r/q de 0,5/1 à 2/1 et une quantité (q + r) a une valeur suffisante pour donner au polyalkylhydrogénosiloxane une viscosité de 5 mPa s à 200 mPa s.

7. Composition selon l'une quelconque des revendications 1 à 6, où (D) le catalyseur de réaction d'hydrosilylation est choisi dans le groupe constitué de (D-1) un métal du groupe du platine, (D-2) un composé de métal du groupe du platine, (D-3) un complexe de composé de métal du groupe du platine avec un organopolysiloxane, (D-4) le composé du métal du groupe du platine microencapsulé dans une matrice ou une structure de type coeur/écorce, et (D-5) le complexe microencapsulé dans une matrice ou une structure de type coeur/écorce.

8. Composition selon la revendication 7, où (D) le catalyseur de réaction d'hydrosilylation comprend un catalyseur de Karstedt.

9. Composition selon l'une quelconque des revendications 1 à 8, où la matière première (E), l'inhibiteur de réaction d'hydrosilylation, comprend un alcool acétylénique.

10. Composition selon la revendication 9, où l'alcool acétylénique comprend du 1-éthynyl-1-cychohexanol.

11. Composition selon la revendication 1, où l'additif d'ancrage comprend du 2-(3,4-époxycyclohexyl)éthyltriméthoxysilane.

12. Composition selon l'une quelconque des revendications 1 à 11, où la matière première (G), le solvant, est présente en une quantité allant jusqu'à 96 % en poids sur la base des poids combinés de toutes les matières premières dans la composition, et le solvant comprend un hydrocarbure aromatique.

13. Procédé de préparation d'une doublure antiadhésive comprenant :
1) le revêtement de la composition selon l'une quelconque des revendications 1 à 12 sur une surface d'un substrat, et
2) le durcissement de la composition pour former un revêtement antiadhésif sur la surface du substrat.

14. Doublure antiadhésive préparée par le procédé selon la revendication 13.
